# EUROPEAN PATENT SPECIFICATION

(11) **EP 0 497 865 B1**
(45) Date of publication and mention of the grant of the patent: **02.06.1999**
(21) Application number: 90916418.8
(22) Date of filing: 26.10.1990
(51) Int. Cl.: A61K 38/46

(54) **PROTECTION OF HARVESTED CROPS FROM PATHOGENS BY TREATMENT WITH ENZYMES**
SCHUTZ VON ERNTEGUT VOR PATHOGENEN DURCH BEHANDLUNG MIT ENZYMEN
PROTECTION DES RECOLTES COUPEES CONTRE LES PATHOGENES PAR TRAITEMENT A L'AIDE D'ENZYMES

(30) Priority: 27.10.1989 US 427878
(43) Date of publication of application: 12.08.1992
(73) Proprietor: GENENCOR INTERNATIONAL, INC., Rochester, New York 14618 (US)
(72) Inventor: ALBERSHEIM, Peter, Athens, GA 30602 (US); BEN-YEHOSHUA, Shimshon, 55 280 Kirvat-Ono (IL); O'NEILL, Roger, A., San Carlos, CA 94070 (US); POULOSE, Ayrookaran, J., San Bruno, CA 94066 (US); DARVILL, Alan, Athens, Georgia 30605 (US)
(74) Representative: Armitage, Ian Michael
(86) International application number: US9006085
(87) International publication number: WO9106312

(56) References cited:
- EP-A- 0 184 288
- EP-A- 0 272 002
- EP-A- 0 275 710
- WO-A-90/03732
- WO-A-91/00022
- WO-A-91/18512
- US-A- 3 911 110
- US-A- 4 032 663
- US-A- 4 762 547
- US-A- 4 891 096
- PATENT ABSTRACTS OF JAPAN vol. 3, no. 95 (C-55)11 August 1979 & JP-A-54 073 182 ( MITSUI SEKIYU KAGAKU KOGYO ) 6 December 1979
- PLANT PHYSIOLOGY vol. 74, no. 1, 1984, BETHESDA, MD pages 52 - 60; K.R.DAVIS ET AL.: 'Host-Pathogen Interactions. XXV. Endopolygalacturonic acid lyase from Erwinia carotovora elicits phytoalexin accumulation by releasing plant cell wall fragments.'
- CHEMICAL ABSTRACTS, vol. 110, no. 13, 27 March 1989, Columbus, Ohio, US; abstract no. 111915M, D.ROBY ET AL.: 'Systemic induction of chitinase activity and resistance in melon plants upon fungal infection or elicitor treatment.' page 431 ;column 2 ;
- CHEMICAL ABSTRACTS, vol. 104, no. 15, 14 April 1986, Columbus, Ohio, US; abstract no. 126732Z, K.R.DAVIS ET AL.: 'Host-pathogen interactions. XXXI. Several biotic and abiotic elicitors act synergistically in the induction of phytoalexin accumulation in soybean.' page 414 ;column 1 ;
- CAB Abstract, issued 1973, WILSON et al., "Effect of Temperature on Penetration of 2, 4-D through isolated leaf cuticles"; see Abstract No. C416995 CA BOWO24-026767.
- Scientific American, Volume 253(3) issued September 1985, P. ALBERSHEIM, "Oligosaccharins", pages 58-64, see entire document.

## Description

The present invention relates to preservation of harvested foodstuffs and, more particularly, to a method and composition for protecting a harvested crop from pathogens utilizing the crop's own natural defense system.

### BACKGROUND OF THE INVENTION

The art has over the years developed innumerable techniques for extending the shelf-life of perishable foodstuffs such as fresh produce. Generally, the approach taken has been to apply to the produce various synthetic and naturally derived preservative compositions which prolong shelf-life without otherwise deleteriously detracting from the appearance and the taste of the product. While many of such compositions are effective, there has nonetheless been a growing concern among consumers in the recent past as to the potential harmful side effects of the chemical preservatives. This, in turn, has led to an increasing interest among food vendors for compositions of natural origin, which are far less likely to cause adverse side effects and which would be more acceptable to the growing number of concerned consumers.

As discussed by Albersheim et al., "Oligosaccharins", Scientific American volume 253(3) September 1985, plants themselves are known to produce compounds which increase their resistance to pathogens. More specifically, plants are now known to contain regulatory molecules called oligosaccharins which, when in active form, appear to deliver a message regulating a particular plant function including defense against disease as well as regulation of morphogenetic pathways. Such oligosaccharins are fragments of the cell wall which are released from the cell wall by enzymes, there being different oligosaccharins released by different enzymes. Once released, the oligosaccharins, which appear to be highly specific, are recognized by the plant and stimulate plant tissue to synthesize antibiotics. The enzymes which cause the release of the oligosaccharins from the cell wall can originate from an invading organism such as a fungus, bacterium or virus or from the cells of the plant itself, such as when such cells have been damaged.

For example, as reported by Davis et al. in "Host-Pathogen Interactions", Plant Physiology, Volume 74, pp. 52-60 (1984), it is known that plants, when invaded by potentially pathogenic microorganisms, can accumulate at the site of infection phytoalexins which are antimicrobial compounds of low molecular weight. Such phytoalexin accumulation is in fact induced by oligosaccharins of microbial origin called elicitors. Compounds which cause release of such oligosaccharin elicitors from cell walls that have been isolated include fungal cell wall glucans and several fungal glycoproteins including a fungal endopolygalacturonase. Elicitors, e.g., pectic oligogalacturonides, have also been released from soybean cell walls by acid hydrolysis. Similar oligogalacturonide elicitors solubilized from cell walls, called endogenous hydrolysis of the walls of suspension-cultured tobacco, sycamore, and wheat cells and from citrus pectin.

It is further known that heat-labile elicitors can be produced by E. caratovora grown on a defined medium containing citrus pectin. These elicitors were released using the enzymes α-1,4-endopolygalacturonic acid lyases (PL), which are pectin-degrading enzymes that have been shown to be secreted by many plant pathogens. Evidence is also present to the effect that release of oligosaccharides from the pectic polymers of plant cell walls by the PL triggers the elicitation of phytoalexin accumulation. This evidence further suggests that the release of endogenous elicitors from plant cell walls by pectin-degrading enzymes plays a role in general plant disease resistance to microorganisms.

It has further been reported by Davis et al, "Host Pathogen Interactions XXXI" Plant Molecular Biology, Vol. 6, pp. 23-32 (1986) that phytoalexin accumulation can be induced in vitro by abiotic and biotic elicitors. Abiotic elicitors include detergents and heavy metal salts, such as HgCl₂. Biotic elicitors include a variety of compounds isolated from microorganisms and plant tissues. It was found that, in the induction of phytoalexin accumulation in soybean cotyledons, a hexa-β-glucosyl glucitol elicitor acts synergistically with either the deca-α-1,4-D-galacturonide elicitor or PGA lyase, an enzyme that releases the decagalacturonide from pectic polysaccharides. Dilute organic-acid buffers were also found to enhance the elicitor activity of the hexa-β-glucosyl glucitols.

It has also been shown that oligosaccharides produced from fungal cell walls can elicit phytoalexin and chitinase accumulation. Hadwiger, L.A., and Beckman, J.M. "Chitosan as a Component of Pea Fusarium the Smallest Chitosan Oligomer that is Maximally Antifungal to Fusarium Solani and Elicits Pisatin Formation in Pisum Sativum" Exp. Mycol., 8: 276-281 (1984); Roby, D., Gadelle, A., and Toppan, A. "Chitin Oligosaccharides as Elicitors of Chitinase Activity in Melon Plants" Biochem. Biopys. Res. Comm. 143: 885-892 (1987). The active oligosaccharides include those of chitin, a β-1,4-linked polymer of N-acetyl glucosamine, and chitosan, a closely related material composed of β-1,4-linked glucosamine residues. Both the phytoalexins and chitinases elicited by these materials can be antifungal. The β-glucan elicitors, which are among the most potent biotic elicitors, have been characterized by Sharp, J., Valent, B., and Albersheim, P. "Purification and Partial Characterization of a β-Glucan Fragment That Elicits Phytoalexin Accumulation in Soybean" J. Biol. Chem. 259: 11312-11320 (1984). (See related Sharp et al.: J. Biol. Chem. 259: 11321-11326 and 11341-11345).

While the above-described natural defenses elicited on harvested crops by the presence of pathogenic agents is theoretically interesting, it is nonetheless a practical reality that, by the time the cell material of a harvested crop produces the much needed anti-pathogenic agent, the growth of the pathogen has often advanced to the point where such anti-pathogenic agents are of little effect.

While oligosaccharin elicitors have been applied to plants in an attempt to "trick" a plant into producing anti-pathogenic agents, i.e., by contacting such plants with oligosaccharins, such attempts have succeeded only where the oligosaccharins enter the plant through a wound which, of course, makes the use of such oligosaccharins impractical for use on a commercial scale. It is therefore concluded that it is not merely the presence of the elicitors generated by pathogens which elicits the anti-pathogenic response by the plant. Thus, while theoretically interesting, there has thus far been little practical application of the above-described plant protection mechanisms since the time period between the initial elicitation of anti-pathogenic agents by a pathogen and the actual production of meaningful quantities of such anti-pathogenic agent can be too long for such anti-pathogenic agents to be effective.

### SUMMARY AND OBJECTS OF THE INVENTION

In view of the foregoing limitations and shortcomings of the prior art methods of protecting harvested crops from pathogens, as well as other disadvantages not specifically mentioned above, it is apparent that there still exists a need in the art for a method and composition for protecting a harvested crop from pathogens which does not require the application thereto of potentially harmful chemicals. It is, therefore, a primary objective of the present invention to fulfill that need by providing a technique for protecting a harvested crop from pathogens which makes use of anti-pathogenic agents derived from the crop itself. More particularly, it is an object of the present invention to provide techniques, compositions and methods for protecting a harvested crop from pathogens by the application to that crop of a compound capable of causing anti-pathogenic agents to be produced by the crop itself before a pathogen causes the production of the anti-pathogenic agents, thereby protecting the crop better from attack or damage from the pathogen.

It is a further object of the present invention to provide a technique for protecting a harvested crop from pathogens wherein the anti-pathogenic agents produced by the harvested crop are elicited independently of the pathogens themselves thereby eliminating the unduly long lag times between attack by a pathogen and production of an effective amount of anti-pathogenic agent.

It is a further object of the present invention to provide a technique for protecting a harvested crop from pathogens wherein the anti-pathogenic agents produced by the harvested crop are elicited by materials released from the cell walls of pathogens present on the crop prior to a time that those materials would normally be released from the pathogens present. Thus, the early release of the materials from the pathogens cause the crop to produce anti-pathogenic agents earlier than would normally occur, thereby reducing or eliminating the lag time between when the pathogen may attack the crop and the production of an effective amount of anti-pathogenic agents by the crop to protect itself from the pathogen.

In a first aspect, the present invention comprises a method for protecting a harvested crop from pathogens comprising applying to the crop a compound capable of generating an elicitor which stimulates the crop to synthesize anti-pathogenic agents, the compound being derived from a source other than a pathogen growing on the crop and the elicitor being generated in situ from the crop or from the pathogen tissue in an amount effective to elicit production of an anti-pathogenic agent by the crop.

In one embodiment of the first aspect, the invention comprises a method for protecting a harvested crop from pathogens wherein the compound capable of generating an elicitor, such as chitinase, chitosanase or endo β-glucanase, is applied to the crop to generate active oligosaccharides, such as β-glucans, chitosan and chitin oligosaccharides, from cell walls of an invading pathogen present on the crop, the oligosaccharides contacting the plant to produce a localized anti-pathogenic response.

In one aspect, the present invention provides a method for protecting a harvested crop from pathogens comprising applying to said harvested crop a composition comprising:
(a) a compound capable of generating in said crop or in a pathogen present on said crop an elicitor which stimulates said crop to synthesize anti-pathogenic agents, and
(b) a penetrating agent capable of assisting said compound in penetrating into the cuticle layer of said crop or pathogen;
   said compound comprising an endoenzyme derived from a source other than a pathogen growing on said crop and applied to said crop in an amount effective to cause said elicitor to be generated in situ in an amount effective to elicit production of an anti-pathogenic agent by the crop.

In another aspect, the present invention relates to a composition for application to a harvested crop to protect said harvested crop from pathogens comprising:
(a) a compound capable of generating in said crop or in a pathogen present on said crop an elicitor which stimulates said crop to synthesize anti-pathogenic agents;
(b) a penetrating agent capable of assisting said compound in penetrating into the cuticle layer of said crop; and
(c) an inhibitor protein;
   said compound comprising an endoenzyme derived from a source other than a pathogen growing on said crop and present in an amount effective to cause said elicitor to be generated in situ in an amount effective to elicit production of an anti-pathogenic agent by the crop.

In another aspect, the present invention relates to a harvested crop protected from pathogenic attack comprising said crop having a composition on a surface of said crop comprising:
(a) a compound capable of generating in said crop or in a pathogen present on said crop an elicitor which stimulates said crop to synthesize anti-pathogenic agents, and
(b) a penetrating agent capable of assisting said compound in penetrating into the cuticle layer of said crop or pathogen; said compound comprising an endoenzyme derived from
   a source other than a pathogen growing on said crop and present in an amount effective to cause said elicitor to be generated in situ in an amount effective to elicit production of an anti-pathogenic agent by the crop.

With the foregoing and other objects, advantages, and features of the invention that will become hereinafter apparent, the nature of the invention may be more clearly understood by reference to the following detailed description of the invention, the appended claims, and to the attached drawings.

### BRIEF DESCRIPTION OF THE DRAWINGS

Figure 1 is a graph depicting the effect of endopolygalacturonase on the decay of strawberries;
Figure 2 is a graph depicting the effect of endopolygalacturonase on the decay of bell peppers; and
Figure 3 is a graph depicting the effect of endopolygalacturonase on the decay of injured and waxed bell peppers.

### DETAILED DESCRIPTION OF PREFERRED EMBODIMENTS

The "compounds capable of generating an elicitor" which are applied to the harvested crop according to this invention, are typically endoenzymes and similar compounds which cause the crop or an invading pathogen to release active oligomer elicitors, such as oligosaccharins, oligogalacturonides, β-glucans, chitins, chitosan, etc., from the cell walls of the crop or the pathogens present on the crop. The endocompounds are useful in the present invention because, it is believed, they produce active oligomers from the crop or pathogen tissue or cell materials, which oligomers are active as elicitors.

The compounds effective against pathogens which are elicited by the elicitors and produced by the crop are referred to as "anti-pathogenic agents."

The present invention is applicable in general to any harvested crop including fruits, vegetables, nuts, grains, trees, etc.

The compounds capable of generating elicitors in crops can be derived from fungi, bacteria, viruses, or from the harvested crop itself. When the crop involves a food product, the compounds must be recognized as being safe for application to fields and, of course, for application to food products. Included among such compounds are endoenzymes such as endocarbohydrases or endolyases which produce active oligomers by breaking up polysaccharide chains at various points along the length of the chain (as opposed to exoenzymes which act only at the end of the chain). Among the endoenzymes, endoglycanases are preferred such as endopolygalacturonase and pectate lyase, pectin lyase, β-glucanase, chitinase, and chitosanase. Particularly preferred are the endoglycanases. Also, especially preferred are endopolygalacturonases such as those prepared from the fungi Fusarium monniliforme and Aspergillus niger.

In a preferred embodiment, the compound, e.g., the enzyme is used in combination with an inhibitor protein of the enzyme in order to achieve an enhanced effect. More specifically, there is employed in combination with the enzyme an inhibitor which forms a complex with the enzyme which is more stable than the enzyme itself. Furthermore, such a complex provides for controlled release of the enzyme once applied to the harvested crop since the enzyme/inhibitor protein complex will be present in equilibrium with the separate entities. Thus, as the complex dissociates in accordance with the equilibrium reaction, the released enzyme will interact with the harvested crop. For example, when the enzyme employed is endopolygalacturonase, an enhanced effect is observed when such enzyme is used in combination with polygalacturonase inhibitor protein. Similarly, when pectate lyase is employed as the compound, an enhanced effect is obtained by the cojoint use of lyase inhibitor protein. Also useful are polygalacturonase inhibiting proteins (PGIP), described by Cervone, et al., and other inhibiting or stabilizing proteins. It is noted that since the complex formed between the enzyme and the inhibitor protein is rather strong, no more than a stoichiometric amount of the inhibitor protein should be employed.

The "penetrating agent" component of the composition of this invention can be any material which causes or assists said eliciter-generating compound to enter the cuticle layer of the harvested crop or a pathogen present on the harvested crop. In those compositions wherein said compound is an enzyme which is itself capable of entering or passing through the cuticle layer of the crop, the penetrating agent used will be a surfactant, a humectant, or other material which aids in the efficient contact of said compound with the cuticle layer and causes the entry of said compound into the cuticle layer to be faster or more efficacious. In those compositions wherein said compound is not itself capable of penetrating the cuticle layer in a reasonable manner or in a reasonable amount of time, the penetrating agent used usually will be a cutinase, wax esterase, or exoenzyme which is capable of entering or penetrating the cuticle layer faster or more efficiently than said compound and which will aid or speed the entry of said compound into the cuticle layer of the crop or the pathogen. In some cases it may be desirable to use such a penetrating agent in order to preserve the activity of said compound so that it will still be capable of generating the desired elicitors once it has entered the cuticle layer of the crop. When the penetrating agent is an enzyme, the composition can also comprise other useful components such as a surfactant, humectant or the like to further enhance the efficiency of the practice of this invention. As will be recognized the penetrating agent may also function to aid the entry of an elicitor into the cuticle layer of the harvested crop where the elicitor is generated by said compound in a pathogen present on the harvested crop and the elicitor then transfers from the pathogen to the harvested crop thereby causing production of phytoalexins in the crop. Appropriate penetrating agents may also be selected from the materials known in the art as "adjuvants" for agricultural chemicals, for example from the adjuvants disclosed in copending application U.S. Serial No. 07/112,108, filed October 19, 1987.

The compositions of this invention will typically contain additional components known to be useful for applying materials to harvested crops, such as one or more carrier materials, buffer materials for pH control, and the like. Water will often be used as a carrier, but other conventional carriers may also be used.

It should be understood that when a composition and method of this invention are employed, the composition is applied to the harvested crop and to any pathogen which may be present on the surface of the harvested crop. The composition of this invention can generate an elicitor from the crop or from the pathogen, whereby the elicitor enters the crop and causes production of anti-pathogenic agents. Thus, the compounds for use in this invention can be selected and formulated to generate the elicitors desired for particular anti-pathogenic agent production. In some cases it will be desirable to generate the elicitor or elicitors in the crop itself in order to cause certain anti-pathogenic agents to be produced to protect the crop from pathogen attack. In other cases it will be desirable to generate the elicitor in the pathogen present on the harvested crop and cause that elicitor to enter the crop in order to cause production of specific anti-pathogenic agents to protect the crop against attack from that particular pathogen. This can be timed to cause the crop to produce its anti-pathogenic agents well in advance of when the crop would have normally been induced to do so by the actual attack of the crop by the pathogen. Thus, by the time the pathogen is mature enough or reaches its life cycle point where it attacks the crop, the crop is already protected against the attack, whereas normally the crop is not stimulated to produce the anti-pathogenic agents until attacked by the pathogen and then cannot produce those agents rapidly enough to protect itself.

In general, the compositions of this invention are applied to the harvested crops in accordance with techniques well known to persons skilled in the art such as in the form of a spray prepared by mixing the enzyme compound and penetrating agent into a suitable carrier such as a buffer solution. A buffer is preferably employed in view of the fact that enzymes are typically quite pH sensitive and thus, are desirably protected from potentially damaging variations in pH. It will be appreciated, however, that it is possible that the natural pH of a crop being treated, which is typically acidic, will be within the acceptable pH range of the enzyme being applied thereto. In such instances, a buffer may not be required. A surfactant is usually employed in order to wet the surface of the crop to thereby obtain exposure of the crop to the enzyme. Typically, the amount of active enzyme compound in the total composition including the carrier is between about 10 and about 1000 Mg/ml, although amounts outside such range might also be acceptable, depending upon the compound being employed and the crop being treated. The amount of the surfactant required is readily ascertainable by persons skilled in the art and will typically range from between about 0.001 and about 0.1 % by weight based on the weight of the carrier.

Where pH regulation is not important, such as where the natural pH of the crop corresponds to the pH at which the applied compound is active, water may serve as the carrier. Where a buffer is employed, there may be used any buffer solution which is compatible with the enzyme and does not otherwise deleteriously affect the crop. Of course, the buffer must also be a material which is known to be safely used with a foodstuff. Suitable buffers include, for example, a 5-50 mM solution of sodium succinate or sodium citrate. As the surfactant, there can be employed, once again, compounds which are compatible with the enzymes being applied, do not otherwise deleteriously affect the crop being treated and are safely used with a foodstuff. Suitable surfactants include, but are not limited to Tween-80 and Triton-X-100.

The above-described formulations, containing the compound capable of generating an elicitor in the crop or in a pathogen present on the crop, the penetrating agent, and, if desired, a surfactant in a suitable carrier are then applied to the harvested crop. Application of the formulation can be carried out in accordance with techniques well known to persons skilled in the art. It will be appreciated that the amount of solution required for treatment of the crop will depend on the particular crop being treated. Such amount is one which is readily ascertained by a person skilled in the art.

It is noted that the formulations of the invention can prevent decay of harvested produce even when applied several days post-harvest, although preferably application occurs relatively soon after the harvest. The produce to which the formulation of the invention is applied is preferably at or near room temperature so that the compound will be active and thus, effecting elicitation of the desired anti-pathogenic agents from the produce. Of course, the formulations may be applied to refrigerated produce with activation occurring once higher temperatures are encountered which, of course, is when the danger of pathogenic attack increases.

Upon application of the formulations of the invention to a harvested crop, elicitors are generated in the crop or in a pathogen present on the crop. Included among such elicitors are oligogalacturonides as well as other oligosaccharin elicitors present in the cellular material of the harvested produce. Furthermore, such elicitors can elicit production of a number of anti-pathogenic agents including, but not limited to, phytoalexins, chitinase, beta-1,3-glucanase and various proteinase inhibitors.

The following examples are given by way of illustration and in no way should be construed as limiting the subject matter disclosed and claimed.

### Example 1:

One hundred strawberries from Lakeland, Florida (Table I) were sprayed three days after having been harvested. During such time, conditions varied, e.g., the temperature varied between 3 and 15°C. The strawberries were subjected to spraying with a control formulation, including 0.05 M sodium acetate (pH=5) and 0.05 % Triton X-100 and with a formulation in accordance with the invention, including 0.2 µg/ml of EPG in 0.05 M sodium acetate (pH=5) and 0.05% Triton X-100. The percentage of decay of the strawberries treated by the control formulation and the formulation of the invention was observed over a period of three days. As shown in Table 1 below, the strawberries treated in accordance with the present invention underwent far less decay over that period.

**Table 1**

| Effect of EPG Spray on the Percentage Decay of Florida Strawberries, cv. Pajaro (kept at room temperature). | | | |
|---|---|---|---|
| Treatment1 2 3 | Days After Treatment | | |
| Control sprayed with 0.05 M Na Acetate and 0.05% Triton X-100 | 3.9 | 26.4 | 52.0 |
| Endopolygalacturonase, 0.2 µg/ml in 0.05 M Na acetate, pH 5.0, and 0.05% Triton X-100 | 0 | 12.5 | 34.2 |

It was observed that much of the decay of the EPG - treated strawberries originated below the calyx leaves where the EPG spray may not have reached. Such decay was primarily caused by Botrytis cinerea, the major pathogen of strawberries.

### Example 2:

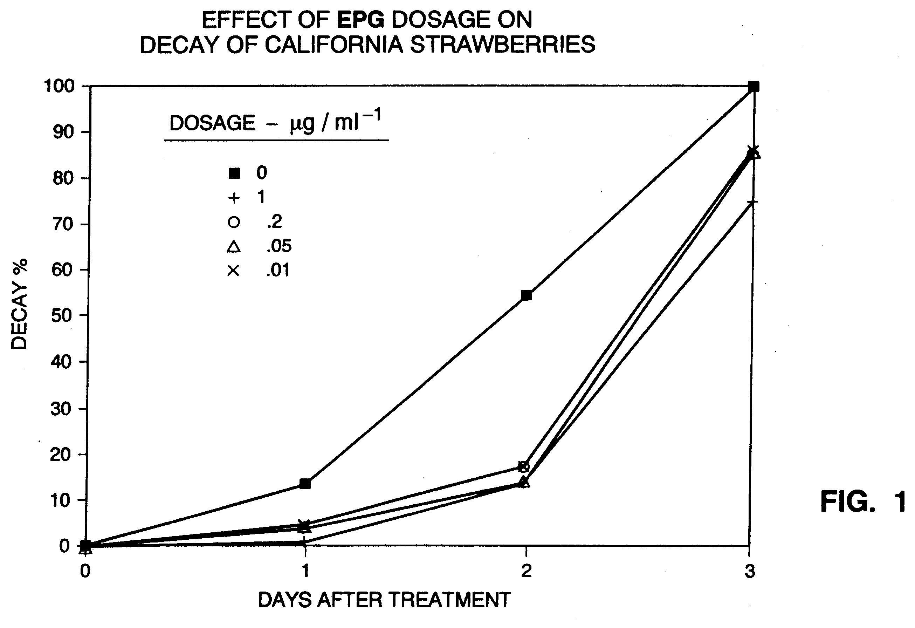

The effect of EPG concentration on decay was observed with respect to 120 strawberries from Los Angeles, California. Specifically, the same EPG formulation employed in Example 1 above, including 0.05 M sodium acetate having a pH of and 0.05% Triton X-100, was applied as a spray to the strawberries. The concentration of EPG was varied between 0 and 1%. As indicated in Figure 1, even the lowest concentration of EPG which was applied (0.01 µg/ml) was still effective.

### Example 3:

Red raspberries, imported from Chile, were purchased in a market in Los Angeles. The raspberries were treated one day after purchase at which time a few rotten fruit had to be culled. Each treatment involved placement of 40 fruit into a single layer. The effect on decay, at 20°C, one day after spraying the raspberries with varying concentrations of the EPG formulation, is presented in Table 2 below:

**Table 2**

| Effect on decay, at 20°C, one day after spraying red raspberries with endopolygalacturonase. | |
|---|---|
| EPG Concentration (µg/ml in 0.05% Tween-80) | Percentage of Decay |
| 0 | 38^{a} |
| 0^{b} | 43 |
| 1.0 | 22 |
| 0.5^{b} | 20 |
| 0.2 | 25 |
| 0.05 | 12 |
| 0.01 | 10 |

| | |
|---|---|
| ^{a}Each treatment consisted of three repetitions of 40 fruit. | |
| ^{b}Polygalacturonic acid (0.05%) was added to the spray solution. | |

It can be seen that the EPG reduced the decay of the raspberries from 37.5% to 10% on the first day after treatment. Interestingly, decreasing the concentration of the EPG from 1µg/ml to O.Olµg/ml appeared to give greater protection.

### Example 4:

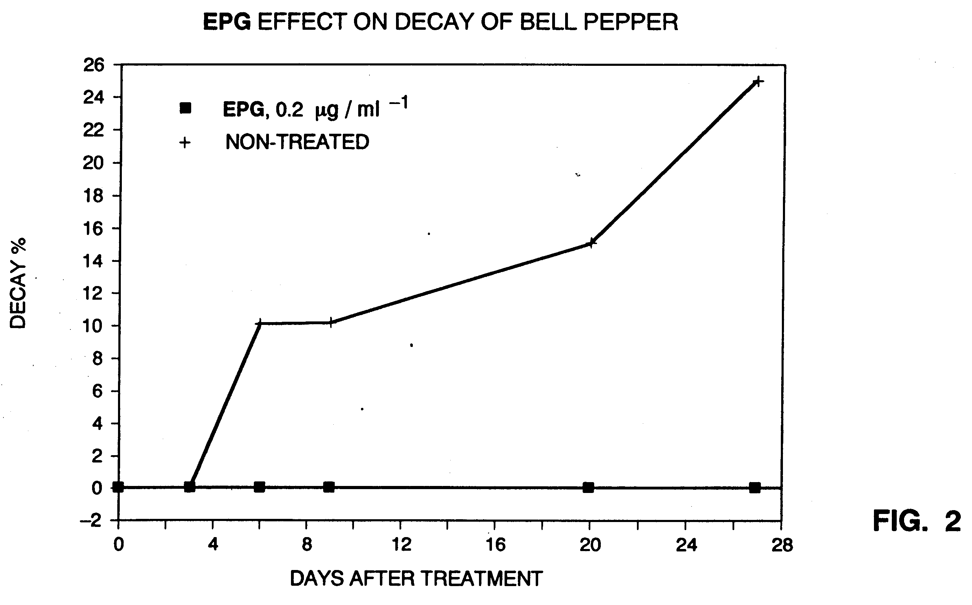

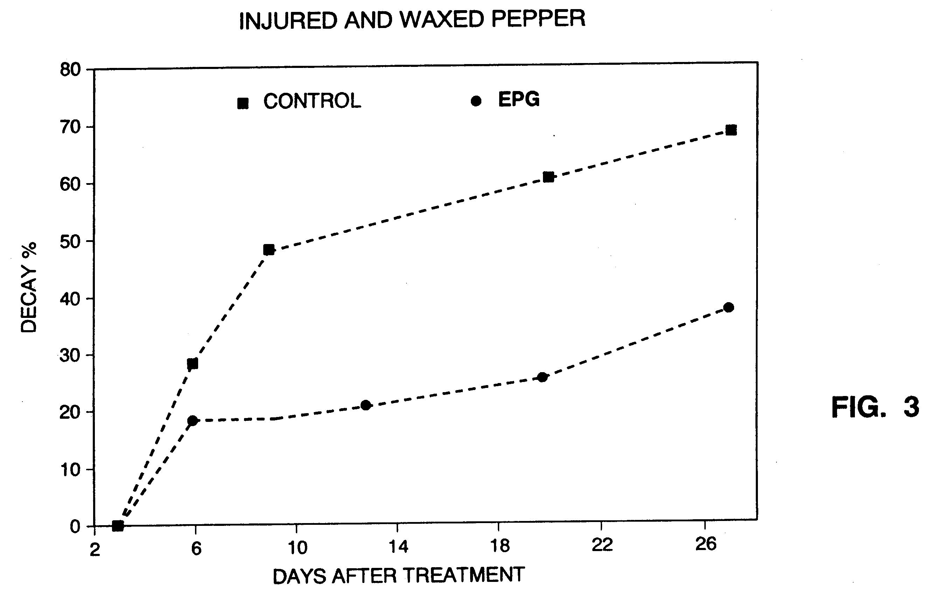

Green bell peppers were harvested in Lakeland, Florida and treated two days after harvest. A formulation was prepared including 0.2 µg/ml of EPG in a 5OmM sodium acetate buffer having a pH of 5 and containing 0.05% Triton X-100. The peppers were maintained in a water-saturated atmosphere throughout the experiment. The EPG was observed to give complete protection over the 27 days of the experiment, as indicated in Figure 2. The same protection was obtained at an EPG concentration of 1µg/ml. It is 5interesting that the EPG inhibited decay resulting from pathogens of the Erwina species as well as from the fungal pathogens Botrytis cinerea and Alternaria alternata. The above findings are highly surprising in view of the fact that peppers, which have a thick cuticle without stomata over the periderm, would not be able to adsorb the EPG. Furthermore, when comparing injured commercially waxed bell peppers, injured by piercing ten holes 3 mm in diameter and 2 mm deep into the periderm, it was observed that the untreated wounded peppers had 68% decay exhibited 27 days after wounding whereas the wounded and EPG-dipped peppers (0.2µg/ml) had 37% decay as illustrated in Figure 3.

### Example 5:

The effects of EPG on lemons, which have relatively good keeping qualities, were studied using artificially inoculated lemons. The inoculation was carried out with spores of Penicillium digitatum, the major pathogen of lemons the world over. The flavedo of the fruit was pierced by a pointed stainless steel rod 3 mm in diameter to a depth of 2 mm and, in EPG-treated samples, the EPG was immediately introduced into the wound. One day later, a suspension of either 1,000 or 10,000 spores per ml were introduced into the wound with an Eppendorf pipette. The rate of development of decay in the inoculated lemons was determined. In two replicated experiments, lemons were treated in each experiment with EPG at 1 and 10 ng per inoculation site. In each experiment, both concentrations of EPG markedly delayed the development of decay. Six days after inoculation, between 60 and 70% of the EPG-treated lemons exhibited decay, while 100% of the lemons not treated with EPG exhibited decay. The area of the decay in those EPG-treated lemons which exhibited decay was reduced, on average, from 106 sq cm to 43 sq cm. Introduction of 1 and 10 ng of EPG per inoculation site gave greater protection than 100 ng per inoculation site.

The above examples clearly demonstrate that the post-harvest application of compounds capable of generating an oligogalacturonide, such as EPG, reduces decay of several fruits and vegetables. Such reduction in decay is obtained even though the enzyme was applied 2-10 days after harvest. Additionally, the enzyme had a beneficial effect on both highly perishable commodities such as strawberries and raspberries as well as on less perishable commodities such as bell peppers and lemons. Furthermore, decay attributable to both bacteria and fungi was reduced.

Although only preferred embodiments of the invention are specifically illustrated and described above, it will be appreciated that many modifications and variations of the present invention are possible in light of the above teachings and within the purview of the appended claims without departing from the intended scope of the invention.

## Claims

1. A method for protecting a harvested crop from pathogens comprising applying to said harvested crop a composition comprising:
(a) a compound capable of generating in said crop or in a pathogen present on said crop an elicitor which stimulates said crop to synthesize anti-pathogenic agents, and
(b) a penetrating agent capable of assisting said compound in penetrating into the cuticle layer of said crop or pathogen;
said compound comprising an endoenzyme derived from a source other than a pathogen growing on said crop and applied to said crop in an amount effective to cause said elicitor to be generated in situ in an amount effective to elicit production of an anti-pathogenic agent by the crop.

2. The method of Claim 1 wherein said elicitor produced is an oligosaccharin.

3. The method of Claim 1 wherein said compound applied to said crop generates an active oligosaccharide from cell walls of an invading pathogen present on said crop, said oligosaccharide contacting the said crop to produce an anti-pathogenic response in said crop.

4. The method of Claim 3 wherein said active oligosaccharide is chitosan or chitin oligosaccharide.

5. The method of any one of Claims 1 to 4 wherein said endoenzyme comprises pectate lyase, pectin lyase, β-glucanase, chitinase, or chitosanase.

6. The method of any one of Claims 1 to 4 wherein said endoenzyme comprises an endoglycanase.

7. The method of any one of Claims 1 to 4 wherein said endoenzyme comprises an endocarbohydrase or endolyase.

8. The method of any one of Claims 1 to 4 wherein said endoenzyme comprises an endopolygalacturonase.

9. The method of any one of Claims 1 to 8 wherein said penetrating agent comprises a surfactant, a humectant, an exoenzyme, a cutinase or a wax esterase.

10. The method of any one of Claims 1 to 9 wherein said composition comprises a buffer.

11. The method of any one of Claims 1 to 10 wherein said composition comprises from about 10 to about 1000 µg/ml of said compound.

12. A composition for application to a harvested crop to protect said crop from pathogens comprising:
(a) a compound capable of generating in said crop or in a pathogen present on said crop an elicitor which stimulates said crop to synthesize anti-pathogenic agents;
(b) a penetrating agent capable of assisting said compound in penetrating into the cuticle layer of said crop; and
(c) a stabiliser protein;
said compound comprising an endoenzyme derived from a source other than a pathogen growing on said crop and present in an amount effective to cause said elicitor to be generated in situ in an amount effective to elicit production of an anti-pathogenic agent by the crop and wherein said stabiliser protein is a protein which is able to complex with said endoenzyme, the stabiliser-protein/endoenzyme complex being more stable than non-complexed endoenzyme, the stabiliser protein thereby providing for controlled release of the endoenzyme from the complex once applied to the harvested crop.

13. The composition of Claim 12 wherein said elicitor produced is an oligosaccharin.

14. The composition of Claim 12 wherein said compound applied to said harvested crop generates an active oligosaccharide from cell walls of an invading pathogen present on said crop, said oligosaccharide contacting the said crop to produce an anti-pathogenic response in said crop.

15. The composition of Claim 14 wherein said active oligosaccharide is chitosan or chitin oligosaccharide.

16. The composition of any one of Claims 12 to 15 wherein said endoenzyme comprises endopolygalacturonase, pectate lyase, pectin lyase, β-glucanase, chitinase, or chitosanase.

17. The composition of any one of Claims 12 to 15 wherein said endoenzyme comprises an endoglycanase.

18. The composition of any one of Claims 12 to 15 wherein said endoenzyme comprises an endocarbohydrase or endolyase.

19. The composition of any one of Claims 12 to 15 wherein said endoenzyme comprises an endopolygalacturonase.

20. The composition of any one of Claims 12 to 19 wherein said penetrating agent comprises a surfactant, a humectant, a cutinase or a wax esterase.

21. The composition of any one of Claims 12 to 20 wherein said composition comprises a buffer.

22. The composition of any one of Claims 12 to 21 wherein said composition comprises 10-1000 µg/ml of said compound.

23. The composition of any one of Claims 12 to 22 comprising a carrier.

24. Use of a compound comprising an endoenzyme in combination with a penetrating agent to penetrate the cuticle layer of a crop and generate an elicitor which stimulates said crop to produce anti-pathogenic agents for the protection of a harvested crop from pathogens;
characterised in that said compound is derived from a source other than a pathogen growing on said crop and applied to said crop in an amount effective to cause said elicitor to be generated in situ in an amount effective to elicit production of an anti-pathogenic agent by said crop.

25. Use according to Claim 24 wherein said elicitor produced is an oligosaccharin.

26. Use according to Claim 24 wherein said compound applied to the crop generates an active oligosaccharide from cell walls of an invading pathogen present on said crop to produce an anti-pathogenic response in said crop.

27. Use according to Claim 26 wherein said active oligosaccharide is chitosan or chitosan oligosaccharide.

28. Use according to any one of Claims 24 to 27 wherein said endoenzyme comprises endopolygalacturonase, pectate lyase, pectin lyase, β-glucanase, chitinase or chitosanase.

29. Use according to any one of Claims 24 to 27 wherein said endoenzyme comprises an endoglycanase.

30. Use according to any one of Claims 24 to 27 wherein said endoenzyme comprises an endocarbohydrase or endolyase.

31. Use according to any one of Claims 24 to 27 wherein said endoenzyme comprises an endopolygalacturonase.

32. Use according to any one of Claims 24 to 31 wherein said penetrating agent comprises a surfactant, a humectant, an exoenzyme, a cutinase or a wax esterase.

33. Use according to any one of Claims 24 to 32 wherein said composition comprises a buffer.

34. Use according to any one of Claims 24 to 33 wherein said composition comprises from about 10 to about 1000 µg/ml of said compound.

## Patentansprüche

1. Verfahren zum Schützen einer geernteten Feldfrucht vor Pathogenen, welches umfaßt, auf die geerntete Feldfrucht eine Zusammensetzung aufzubringen, umfassend:
(a) eine Verbindung, die in der Lage ist, in der Feldfrucht oder in einem auf der Feldfrucht anwesenden Pathogen einen Elicitor zu erzeugen, der die Feldfrucht stimuliert, antipathogene Mittel zu synthetisieren, und
(b) ein Penetriermittel, das in der Lage ist, die Verbindung darin zu unterstützen, in die Kutikula-Schicht der Feldfrucht oder des Pathogens einzudringen,
wobei die Verbindung ein Endoenzym umfaßt, das von einer anderen Quelle als einem Pathogen, das auf der Feldfrucht wächst, abgeleitet ist und auf die Feldfrucht in einer wirksamen Menge aufgebracht wird, so daß verursacht wird, daß der Elicitor in situ in einer wirksamen Menge erzeugt wird, um eine Produktion eines antipathogenen Mittels durch die Feldfrucht auszulösen.

2. Verfahren nach Anspruch 1, wobei der produzierte Elicitor ein Oligosaccharin ist.

3. Verfahren nach Anspruch 1, wobei die auf die Feldfrucht aufgebrachte Verbindung ein aktives Oligosaccharid von Zellwänden eines eindringenden Pathogens, das auf der Feldfrucht anwesend ist, erzeugt, wobei das Oligosaccharid mit der Feldfrucht in Kontakt kommt, um eine antipathogene Antwort in der Feldfrucht zu erzeugen.

4. Verfahren nach Anspruch 3, wobei das aktive Oligosaccharid Chitosan- oder Chitin-Oligosaccharid ist.

5. Verfahren nach einem der Ansprüche 1 bis 4, wobei das Endoenzym Pektatlyase, Pektinlyase, β-Glucanase, Chitinase oder Chitosanase umfaßt.

6. Verfahren nach einem der Ansprüche 1 bis 4, wobei das Endoenzym eine Endoglycanase umfaßt.

7. Verfahren nach einem der Ansprüche 1 bis 4, wobei das Endoenzym eine Endocarbohydrase oder Endolyase umfaßt.

8. Verfahren nach einem der Ansprüche 1 bis 4, wobei das Endoenzym eine Endopolygalacturonase umfaßt.

9. Verfahren nach einem der Ansprüche 1 bis 8, wobei das Penetriermittei ein grenzflächenaktives Mittel, ein Benetzungsmittel, ein Exoenzym, eine Kutinase oder eine Wachsesterase umfaßt.

10. Verfahren nach einem der Ansprüche 1 bis 9, wobei die Zusammensetzung einen Puffer umfaßt.

11. Verfahren nach einem der Ansprüche 1 bis 10, wobei die Zusammensetzung ungefähr 10 bis ungefähr 1000 µg/ml der Verbindung umfaßt.

12. Zusammensetzung zum Aufbringen auf eine geerntete Feldfrucht, um die Feldfrucht vor Pathogenen zu schützen, umfassend:
(a) eine Verbindung, die in der Lage ist, in der Feldfrucht oder in einem auf der Feldfrucht anwesenden Pathogen einen Elicitor zu erzeugen, der die Feldfrucht stimuliert, antipathogene Mittel zu synthetisieren,
(b) ein Penetriermittel, das in der Lage ist, die Verbindung darin zu unterstützen, in die Kutikula-Schicht der Feldfrucht einzudringen, und
(c) ein Stabilisatorprotein,
wobei die Verbindung ein Endoenzym umfaßt, das von einer anderen Quelle als einem Pathogen, das auf der Feldfrucht wächst, abgeleitet ist und in einer Menge vorliegt, die wirksam ist, daß verursacht wird, daß der Elicitor in situ in einer wirksamen Menge erzeugt wird, um eine Produktion eines antipathogenen Mittels durch die Feldfrucht auszulösen, und wobei das Stabilisatorprotein ein Protein ist, welches in der Lage ist, einen Komplex mit dem Endoenzym zu bilden, wobei der Stabilisatorprotein/Endoenzym-Komplex stabiler ist als nicht-komplexiertes Endoenzym, wodurch das Stabilisatorprotein eine kontrollierte Freisetzung des Endoenzyms aus dem Komplex, sobald dieser einmal auf die geerntete Feldfrucht aufgebracht ist, gewährleistet.

13. Zusammensetzung nach Anspruch 12, wobei der produzierte Elicitor ein Oligosaccharin ist.

14. Zusammensetzung nach Anspruch 12, wobei die auf die geerntete Feldfrucht aufgebrachte Verbindung ein aktives Oligosaccharid von Zellwänden eines eindringenden Pathogens, das auf der Feldfrucht anwesend ist, erzeugt, wobei das Oligosaccharid mit der Feldfrucht in Kontakt kommt, um eine antipathogene Antwort in der Feldfrucht zu erzeugen.

15. Zusammensetzung nach Anspruch 14, wobei das aktive Oligosaccharid Chitosan- oder Chitin-Oligosaccharid ist.

16. Zusammensetzung nach einem der Ansprüche 12 bis 15, wobei das Endoenzym Endopolygalacturonase, Pektatlyase, Pektinlyase, β-Glucanase, Chitinase oder Chitosanase umfaßt.

17. Zusammensetzung nach einem der Ansprüche 12 bis 15, wobei das Endoenzym eine Endoglycanase umfaßt.

18. Zusammensetzung nach einem der Ansprüche 12 bis 15, wobei das Endoenzym eine Endocarbohydrase oder Endolyase umfaßt.

19. Zusammensetzung nach einem der Ansprüche 12 bis 15, wobei das Endoenzym eine Endopolygalacturonase umfaßt.

20. Zusammensetzung nach einem der Ansprüche 12 bis 19, wobei das Penetriermittel ein grenzflächenaktives Mittel, ein Benetzungsmittel, eine Kutinase oder eine Wachsesterase umfaßt.

21. Zusammensetzung nach einem der Ansprüche 12 bis 20, wobei die Zusammensetzung einen Puffer umfaßt.

22. Zusammensetzung nach einem der Ansprüche 12 bis 21, wobei die Zusammensetzung 10 - 1000 µg/ml der Verbindung umfaßt.

23. Zusammensetzung nach einem der Ansprüche 12 bis 22, welche einen Träger umfaßt.

24. Verwendung einer Verbindung, umfassend ein Endoenzym in Verbindung mit einem Penetriermittel, um die Kutikula-Schicht einer Feldfrucht zu durchdringen und einen Elicitor zu erzeugen, der die Feldfrucht dazu stimuliert, antipathogene Mittel für den Schutz einer geernteten Feldfrucht vor Pathogenen zu produzieren, dadurch gekennzeichnet, daß die Verbindung von einer anderen Quelle als einem Pathogen, das auf der Feldfrucht wächst, abgeleitet ist und in einer wirksamen Menge auf die Feldfrucht aufgebracht wird, so daß verursacht wird, daß der Elicitor in situ in einer wirksamen Menge erzeugt wird, um eine Produktion eines antipathogenen Mittels durch die Feldfrucht auszulösen.

25. Verwendung nach Anspruch 24, wobei der produzierte Elicitor ein Oligosaccharin ist.

26. Verwendung nach Anspruch 24, wobei die auf die Feldfrucht aufgebrachte Verbindung ein aktives Oligosaccharid von Zellwänden eines eindringenden Pathogens, das auf der Feldfrucht anwesend ist, erzeugt, um eine antipathogene Antwort in der Feldfrucht zu erzeugen.

27. Verwendung nach Anspruch 26, wobei das aktive Oligosaccharid Chitosan oder Chitosan-Oligosaccharid ist.

28. Verwendung nach einem der Ansprüche 24 bis 27, wobei das Endoenzym Endopolygalacturonase, Pektatlyase, Pektinlyase, β-Glucanase, Chitinase oder Chitosanase umfaßt.

29. Verwendung nach einem der Ansprüche 24 bis 27, wobei das Endoenzym eine Endoglycanase umfaßt.

30. Verwendung nach einem der Ansprüche 24 bis 27, wobei das Endoenzym eine Endocarbohydrase oder Endolyase umfaßt.

31. Verwendung nach einem der Ansprüche 24 bis 27, wobei das Endoenzym eine Endopolygalacturonase umfaßt.

32. Verwendung nach einem der Ansprüche 24 bis 31, wobei das Penetriermittel ein grenzflächenaktives Mittel, ein Benetzungsmittel, ein Exoenzym, eine Kutinase oder eine Wachsesterase umfaßt.

33. Verwendung nach einem der Ansprüche 24 bis 32, wobei die Zusammensetzung einen Puffer umfaßt.

34. Verwendung nach einem der Ansprüche 24 bis 33, wobei die Zusammensetzung ungefähr 10 bis ungefähr 1000 µg/ml der Verbindung umfaßt.

## Revendications

1. Procédé permettant de protéger une récolte coupée contre des agents pathogènes, comprenant l'application sur ladite récolte coupée d'une composition comprenant :
(a) un composé capable de générer dans ladite récolte ou dans un agent pathogène présent sur ladite récolte un déclencheur qui stimule la synthèse d'agents anti-pathogènes par ladite récolte, et
(b) un agent de pénétration capable d'aider ledit composé à pénétrer dans la couche épidermique de ladite récolte ou dudit agent pathogène ;
ledit composé comprenant une endoenzyme dérivée d'une source autre qu'un agent pathogène poussant sur ladite récolte et appliquée sur ladite récolte en une quantité efficace pour provoquer la génération dudit déclencheur in situ en une quantité efficace pour déclencher la production d'un agent anti-pathogène par la récolte.

2. Procédé selon la revendication 1, dans lequel ledit déclencheur produit est une oligosaccharine.

3. Procédé selon la revendication 1, dans lequel ledit composé appliqué sur ladite récolte génère un oligosaccharide actif à partir de parois de cellules d'un agent pathogène invasif présent sur ladite récolte, ledit oligosaccharide entrant en contact avec ladite récolte afin de produire une réponse anti-pathogène dans ladite récolte.

4. Procédé selon la revendication 3, dans lequel ledit oligosaccharide est un oligosaccharide de chitosanne ou de chitine.

5. Procédé selon l'une quelconque des revendications 1 à 4, dans lequel ladite endoenzyme comprend de la lyase de pectate, de la lyase de pectine, de la β-glucanase, de la chitinase ou de la chitosanase.

6. Procédé selon l'une quelconque des revendications 1 à 4, dans lequel ladite endoenzyme comprend une endoglycanase.

7. Procédé selon l'une quelconque des revendications 1 à 4, dans lequel ladite endoenzyme comprend une endocarbohydrase ou une endolyase.

8. Procédé selon l'une quelconque des revendications 1 à 4, dans lequel ladite endoenzyme comprend une endopolygalacturonase.

9. Procédé selon l'une quelconque des revendications 1 à 8, dans lequel ledit agent de pénétration comprend un tensio-actif, un humectant, une exoenzyme, une cutinase ou une cire estérase.

10. Procédé selon l'une quelconque des revendications 1 à 9, dans lequel ladite composition comprend un tampon.

11. Procédé selon l'une quelconque des revendications 1 à 10, dans lequel ladite composition comprend d'environ 10 à environ 1000 µg/ml dudit compose.

12. Composition pour application sur une récolte coupée permettant de protéger ladite récolte contre des agents pathogènes, comprenant :
(a) un composé capable de générer dans ladite récolte ou sur un agent pathogène présent sur ladite récolte un déclencheur qui stimule la synthèse d'agents anti-pathogènes par ladite récolte ;
(b) un agent de pénétration capable d'aider ledit composé à pénétrer dans la couche épidermique de ladite récolte ; et
(c) une protéine stabilisatrice ;
ledit composé comprenant une endoenzyme dérivée d'une source autre qu'un agent pathogène poussant sur ladite récolte et présente dans une quantité efficace pour provoquer la génération dudit déclencheur in situ, en une quantité efficace pour provoquer la production d'un agent anti-pathogène par la récolte, et dans lequel ladite protéine stabilisatrice est une protéine capable de former un complexe avec ladite endoenzyme, le complexe protéine stabilisatrice/endoenzyme étant plus stable que l'endoenzyme non complexée, la protéine stabilisatrice permettant ainsi la libération contrôlée de l'endoenzyme du complexe une fois appliqué sur la récolte coupée.

13. Composition selon la revendication 12, dans laquelle ledit déclencheur produit est une oligosaccharine.

14. Composition selon la revendication 12, dans laquelle ledit composé appliqué sur ladite récolte coupée génère un oligosaccharide actif à partir des parois des cellules d'un agent pathogène invasif présent sur ladite récolte, ledit oligosaccharide entrant en contact avec ladite récolte afin de produire une réponse anti-pathogène dans ladite récolte.

15. Composition selon la revendication 14, dans laquelle ledit oligosaccharide actif est un oligosaccharide de chitosanne ou de chitine.

16. Composition selon l'une quelconque des revendications 12 à 15, dans laquelle ladite endoenzyme comprend de l'endopolygalacturonase, de la lyase de pectate, de la lyase de pectine, de la β-glucanase, de la chitinase ou de la chitosanase.

17. Composition selon l'une quelconque des revendications 12 à 15, dans laquelle ladite endoenzyme comprend une endoglycanase.

18. Composition selon l'une quelconque des revendications 12 a 15, dans laquelle ladite endoenzyme comprend une endocarbohydrase ou une endolyase.

19. Composition selon l'une quelconque des revendications 12 à 15 dans laquelle ladite endoenzyme comprend une endopolygalacturonase.

20. Composition selon l'une quelconque des revendications 12 à 19, dans laquelle ledit agent de pénétration comprend un tensio-actif, un humectant, une cutinase ou une cire estérase.

21. Composition selon l'une quelconque des revendications 12 à 20, dans laquelle ladite composition comprend un tampon.

22. Composition selon l'une quelconque des revendications 12 à 21, dans laquelle ladite composition comprend 10 à 1000 µg/ml dudit composé.

23. Composition selon l'une quelconque des revendications 12 à 22 comprenant un porteur.

24. Utilisation d'un composé comprenant une endoenzyme en combinaison avec un agent de pénétration, permettant de pénétrer dans la couche épidermique d'une récolte et de générer un déclencheur qui stimule la production d'agents anti-pathogènes par ladite récolte, pour la protection d'une récolte coupée contre des agents pathogènes ;
caractérisée en ce que ledit composé est dérivé d'une source autre qu'un agent pathogène poussant sur ladite récolte et appliqué sur ladite récolte en une quantité efficace pour provoquer la génération dudit déclencheur in situ en une quantité efficace pour provoquer la production d'un agent anti-pathogène par ladite récolte.

25. Utilisation selon la revendication 24, dans laquelle ledit déclencheur produit est une oligosaccharine.

26. Utilisation selon la revendication 24, dans laquelle ledit composé appliqué sur la récolte génère un oligosaccharide actif à partir de parois de cellules d'un agent pathogène invasif présent sur ladite récolte afin de produire une réponse anti-pathogène dans ladite récolte.

27. Utilisation selon la revendication 26, dans laquelle ledit oligosaccharide actif est un oligosaccharide de chitosanne ou de chitine.

28. Utilisation selon l'une quelconque des revendications 24 à 27, dans laquelle ladite endoenzyme comprend de l'endopolygalacturonase, de la lyase de pectate, de la lyase de pectine, de la β-glucanase, de la chitinase ou de la chitosanase.

29. Utilisation selon l'une quelconque des revendications 24 à 27, dans laquelle ladite endoenzyme comprend une endoglycanase.

30. Utilisation selon l'une quelconque des revendications 24 à 27, dans laquelle ladite endoenzyme comprend une endocarbohydrase ou une endolyase.

31. Utilisation selon l'une quelconque des revendications 24 à 27, dans laquelle ladite endoenzyme comprend une endopolygalacturonase.

32. Utilisation selon l'une quelconque des revendications 24 à 31, dans laquelle ledit agent de pénétration comprend un tensio-actif, un humectant, une exoenzyme, une cutinase ou une cire estérase.

33. Utilisation selon l'une quelconque des revendications 24 à 32, dans laquelle ladite composition comprend un tampon.

34. Utilisation selon l'une quelconque des revendications 24 à 33, dans laquelle ladite composition comprend d'environ 10 à environ 1000 µg/ml dudit composé.
